# EUROPEAN PATENT APPLICATION

(11) **EP 1 659 320 A1**
(43) Date of publication of application: **24.05.2006**
(21) Application number: 04770939.9
(22) Date of filing: 26.07.2004
(51) Int. Cl.: F16K 27/02

(54) **VALVE DEVICE**

(30) Priority: 26.08.2003 JP 2003300962
(71) Applicant: Kabushiki Kaisha Saginomiya Seisakusho, Tokyo 165-0033 (JP)
(72) Inventor: UCHIDA, Hiroshi, K.K. Saginomiya Seisakusho Sayama, Sayama-shi, Saitama 3501327 (JP); SEKIGUCHI, Hideki, Sayama-shi, Saitama 3501327 (JP); OHNO, Michiaki, Sayama-shi, Saitama 3501327 (JP)
(74) Representative: Skuhra, Udo
(86) International application number: PCT/JP2004/010628
(87) International publication number: WO 2005/019709

(57) **Abstract**

A valve device is provided, by which a reverse flow can be avoided without being restricted by pipe arrangement and without bending a primary piping, thereby preventing a defective operation due to a dynamic pressure from occurring. An inlet side inner passage includes a bent part (formed with an inlet side lateral inner passage 21 and the inlet side longitudinal inner passage 22) in a valve housing 11, that is, the inner passage formed in the valve housing 11 takes charge of such a bent part required in a primary piping to avoid a reverse flow.

## Description

### [TECHNICAL FIELD]

The present invention relates to a valve device. In particular, the present invention relates to a valve device such as an electric operated valve or electromagnetic valve, which is used on a high pressure condition, for example, in a supercritical cycle with carbon dioxide refrigerant.

### [BACKGROUND ART]

As a valve device such as an electromagnetic valve or electric operated valve for channel selecting or flow rate controlling, a valve device has been proposed, in which a valve port is formed in a valve housing, a valve element for opening and closing the valve port when the valve element moves in an axial direction thereof is provided in the valve housing, the valve element includes a valve shaft supported slidably in the axial direction by the valve housing at one side of the valve element, the valve shaft is connected to driving means such as an electromagnetic solenoid and electric motor for driving the valve element, inlet and outlet side joint ports are opened at an outer surface of the valve housing, and one side of the valve port communicates with the inlet side joint port through an inlet side inner passage formed in the valve housing, while an opposite side of the valve port communicates with the outlet side joint port through an outlet side inner passage formed in the valve housing (for example, see Patent Publication 1).

Patent Publication 1: Japanese Patent Application Laid-Open No. 2000-193101

### [DISCLOSURE OF THE INVENTION]

### [PROBLEMS THAT THE INVENTION IS TO SOLVE]

In a conventional valve device, because of condition or restriction of piping, if a reverse flow of fluid flowing from an outlet side joint port to an inlet side joint port occurs, when the valve is opened, a dynamic pressure acts on an end of a valve element where the valve element is seated on a valve seat around a valve port (that is, on a free end situated on a side reverse to a side where a valve shaft is located). Therefore, a shaft core of the valve element is inclined by as much as a clearance at a support part of the slidable valve shaft supported by the valve housing, resulting in that the valve element cannot be precisely seated on the valve seat when the valve is closed, thereby causing a defective operation.

In particular, on a condition that a high pressure is used, in which a refrigerant pressure at a high pressure side (i.e. inlet side) exceeds a critical pressure of the refrigerant, for example, in a supercritical cycle with carbon dioxide refrigerant, the influence due to the dynamic pressure described above becomes significant.

Moreover, in a supercritical cycle, the thickness of a pipe or joint must be increased because of high pressure, then the bending machining of these components becomes difficult to do, resulting in that the restriction of piping increases, and since it is difficult to connect a primary piping (i.e. first piping) to an inlet side joint port of the valve device without bending the primary piping in a use of the valve device in its normal posture, therefore a reverse flow of fluid flowing from the outlet side joint port to the inlet side joint port tends to happen.

It is therefore an objective of the present invention to solve the above problem and to provide a valve device, by which a reverse flow can be avoided without being restricted by pipe arrangement and without bending a primary piping, thereby preventing a defective operation due to a dynamic pressure from occurring.

### [MEANS OF SOLVING THE PROBLEMS]

In order to attain the above objective, the present invention is to provide a valve device (single seat-valve) including:
a valve housing;
an inlet side joint port and an outlet side joint port, both opened at an outer surface of the valve housing;
a valve port formed in the valve housing; and
a valve element formed in the valve housing for opening and closing the valve port when the valve element moves in an axial direction thereof, the valve element including a valve shaft supported slidably in the axial direction by the valve housing at one side of the valve element, the valve shaft being connected to driving means for driving the valve element,
wherein one side of the valve port communicates with the inlet side joint port through an inlet side inner passage formed in the valve housing, while an opposite side of the valve port communicates with the outlet side joint port through an outlet side inner passage formed in the valve housing,
wherein the inlet side inner passage includes a bent part in the valve housing so that a pressure at the inlet side joint port acts on the valve shaft of the valve element from a lateral direction of the valve shaft.

The present invention is also to provide a valve device (plural seat-valve) including:
a valve housing;
an inlet side joint port and an outlet side joint port, both opened at an outer surface of the valve housing;
a first valve port and a second valve port, both formed in the valve housing on the same axis having a distance therebetween in an axial direction thereof; and
a valve element formed in the valve housing including integrally a first valve part for opening and closing the first valve port and a second valve part for opening and closing the second valve port when the valve element moves in an axial direction thereof, the valve element including a valve shaft supported slidably in the axial direction by the valve housing at one side of the valve element, the valve shaft being connected to driving means for driving the valve element,
wherein each one side of the first and second valve ports communicates with the inlet side joint port through an inlet side inner passage formed in the valve housing, while each opposite side of the first and second valve ports communicates with the outlet side joint port through an outlet side inner passage formed in the valve housing and the valve element,
wherein the inlet side inner passage includes a bent part so that a pressure at the inlet side joint port acts on between the first valve part and the second valve part of the valve element.

The present invention is also to provide a valve device (plural seat-valve) including:
a valve housing;
an inlet side joint port and an outlet side joint port, both opened at an outer surface of the valve housing;
a first valve port and a second valve port, both formed in the valve housing on the same axis having a distance therebetween in an axial direction thereof; and
a valve element formed in the valve housing including integrally a first valve part for opening and closing the first valve port and a second valve part for opening and closing the second valve port when the valve element moves in an axial direction thereof, the valve element including a valve shaft supported slidably in the axial direction by the valve housing at one side of the valve element, the valve shaft being connected to driving means for driving the valve element,
wherein each one side of the first and second valve ports communicates with the inlet side joint port through an inlet side inner passage formed in the valve housing, while each opposite side of the first and second valve ports communicates with the outlet side joint port through an outlet side inner passage formed in the valve housing and the valve element,
wherein the inlet side inner passage includes a by-pass passage so that a pressure at the inlet side joint port acts on between the first valve part and the second valve part of the valve element.

### [EFFECTS OF THE INVENTION]

According to the valve device of the present invention defined in claim 1 or 2, the inlet side inner passage includes the bent part in the valve housing, that is, the inner passage in the valve housing takes charge of the bent part required in a primary piping (i.e. first piping) to avoid a reverse flow. Therefore, a reverse flow can be avoided. When the valve is open, a dynamic pressure is prevented from acting on an end of the valve element. That is, a shaft core of the valve element is prevented from inclining, thereby preventing a defective operation from occurring.

According to the valve device of the present invention defined in claim 3, since the by-pass passages are provided, the by-pass passages take charge of the bent part required in a primary piping (i.e. first piping) to avoid a reverse flow. Therefore, a reverse flow can be avoided. When the valve is open, a dynamic pressure is prevented from acting on an end of the valve element. That is, a shaft core of the valve element is prevented from inclining, thereby preventing a defective operation from occurring.

### [BRIEF DESCRIPTION OF THE DRAWINGS]

Figure 1 is a longitudinal cross sectional view of a valve device in EXAMPLE 1 as a preferred embodiment of the present invention, in which the valve device is applied to an electric operated plural seat-valve.
Figure 2 is a longitudinal cross sectional view of a valve device in EXAMPLE 2 as another preferred embodiment of the present invention, in which the valve device is applied to an electric operated plural seat-valve.
Figure 3 is a cross sectional view taken along A - A line in Fig. 2.
Figure 4 is a longitudinal cross sectional view of a valve device in EXAMPLE 3 as a further preferred embodiment of the present invention, in which the valve device is applied to an electric operated plural seat-valve.
Figure 5 is a longitudinal cross sectional view of a valve device in EXAMPLE 4 as a further preferred embodiment of the present invention, in which the valve device is applied to an electric operated plural seat-valve.
Figure 6 is a longitudinal cross sectional view of a valve device in EXAMPLE 5 as a further preferred embodiment of the present invention, in which the valve device is applied to an electric operated plural seat-valve.
Figure 7 is a longitudinal cross sectional view of a valve device in EXAMPLE 6 as a further preferred embodiment of the present invention, in which the valve device is applied to an electric operated plural seat-valve.
Figure 8 is a longitudinal cross sectional view of a valve device in EXAMPLE 7 as a further preferred embodiment of the present invention, in which the valve device is applied to an electric operated plural seat-valve.
Figure 9 is a longitudinal cross sectional view of a valve device in EXAMPLE 8 as a further preferred embodiment of the present invention, in which the valve device is applied to an electric operated plural seat-valve.
Figure 10 is a longitudinal cross sectional view of a valve device in EXAMPLE 9 as a further preferred embodiment of the present invention, in which the valve device is applied to an electric operated plural seat-valve.
Figure 11 is a longitudinal cross sectional view of a valve device in EXAMPLE 9 as a further preferred embodiment of the present invention, in which the valve device is applied to an electric operated plural seat-valve.
Figure 12 is a longitudinal cross sectional view of a valve device in EXAMPLE 10 as a further preferred embodiment of the present invention, in which the valve device is applied to an electric operated plural seat-valve.
Figure 13 is a longitudinal cross sectional view of a valve device in EXAMPLE 11 as a further preferred embodiment of the present invention, in which the valve device is applied to an electric operated plural seat-valve.
Figure 14 is a longitudinal cross sectional view of a valve device in EXAMPLE 12 as a further preferred embodiment of the present invention, in which the valve device is applied to an electric operated plural seat-valve.
Figure 15 is a cross sectional view taken along B - B line in Fig. 14.
Figure 16 is a longitudinal cross sectional view of a valve device in EXAMPLE 13 as a preferred embodiment of the present invention, in which the valve device is applied to an electric operated single seat-valve.
Figure 17 is a block diagram of a hot water supply cycle device using a CO₂ refrigerant in EXAMPLE 14, to which a valve device as an electric operated single or plural seat-valve according to a preferred embodiment of the present invention is employed.

### [ABBREVIATION NUMERALS]

10: electric operated plural seat-valve
11: valve housing
12, 112, 212: inlet side joint port
13, 113, 213: outlet side joint port
14: inlet joint
15: outlet joint
16, 116, 216: lower valve chamber
17: upper valve chamber
18, 118: first valve port
19: second valve port
21, 61, 74: inlet side lateral inner passage
22, 73, 76: inlet side longitudinal inner passage
24, 124, 224, 63, 66, 67, 70: outlet side longitudinal inner passage
25, 26, 62, 64, 68, 71: outlet side lateral inner passage
30: valve element
31: first valve part
32: second valve part
33: valve shaft
40: stepping motor
77: valve seat member
78: by-pass passage hole
300: electric operated single seat-valve
311: valve housing
312: inlet side joint port
313: outlet side joint port
314: inlet joint
315: outlet joint
316: valve chamber
318: valve port
321: inlet side lateral inner passage
322: inlet side longitudinal inner passage
324: outlet side longitudinal inner passage
325, 326: outlet side lateral inner passage
330: valve element
333: valve shaft

### [BEST MODE FOR CARRING OUT THE INVENTION]

In the following, the preferred embodiments of the present invention will be explained in detail with reference to the attached drawings.

### [EXAMPLE 1]

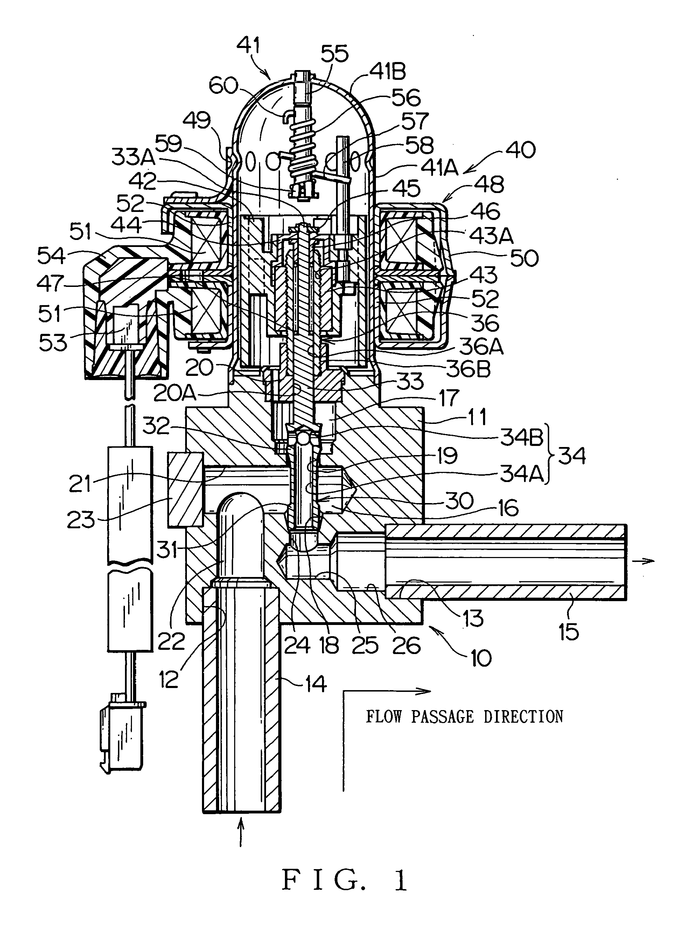

Figure 1 is a longitudinal cross sectional view of a valve device in EXAMPLE 1 of the present invention, in which the valve device is applied to an electric operated plural seat-valve.

The electric operated plural seat-valve in EXAMPLE 1 is indicated by reference numeral 10 as a whole thereof. The plural seat-valve 10 includes a block-shaped valve housing 11. The valve housing 11 is provided with an inlet side joint port 12 opening at a lower bottom surface (outer surface) of the valve housing 11 and an outlet side joint port 13 opening at a right side surface (outer surface) of the valve housing 11. The inlet side joint port 12 is connected to an inlet joint (lower joint) 14 while the outlet side joint port 13 is connected to an outlet joint (lateral joint) 15.

Inside the valve housing 11, a lower valve chamber 16 and upper valve chamber 17 are formed up and down. A first valve port 18 communicating with an outlet side longitudinal inner passage 24 (explained later) is formed at a lower bottom surface of the lower valve chamber 16 while a second valve port 19 communicating with the upper valve chamber 17 is formed at an upper surface of the lower valve chamber 16. The first valve port 18 and the second valve port 19 are arranged being aligned with each other on the same axis having a distance (corresponding to a height of the lower valve chamber 16) therebetween in the axial direction.

A valve shaft-guiding member 20 is fixed being caulked at an upper part of the valve housing 11. The valve shaft-guiding member 20 has a bearing hole 20A passing through in an up-and-down direction (i.e. in the axial direction), by which a valve shaft 33 of a valve element 30 is supported slidably in the axial direction.

The valve element 30 includes a lower first valve part 31 for opening and closing the first valve port 18 and an upper second valve part 32 for opening and closing the second valve port 19 on the same axis. When the valve element 30 moves in the axial direction thereof, the first valve port 18 and the second valve port 19 are simultaneously opened or closed. A valve shaft 33 is located above the second valve part 32.

Each one side of the respective first and second valve ports 18, 19 communicates with the inlet side joint port 12 through the lower valve chamber 16, a lateral hole-shaped (i.e. cave-shaped) inlet side lateral inner passage 21 and a longitudinal hole-shaped (i.e. pit-shaped) inlet side longitudinal inner passage 22 formed in the valve housing 11. The inlet side lateral inner passage 21 is a drill hole drilled from a left side of the valve housing 11. The lower valve chamber 16 is also formed with this drill hole. An open end of this drill hole is closed by a plug 23. The inlet side longitudinal inner passage 22 is a drill hole drilled from a lower bottom surface of the valve housing 11. The inlet side longitudinal inner passage 22 communicates with the inlet side joint port 12 at the lower side thereof and communicates with the inlet side lateral inner passage 21 at an upper end thereof.

The inlet side lateral inner passage 21 and the inlet side longitudinal inner passage 22 form a hook-shaped bent part that connects the inlet side joint port 12 to each one side of the respective first and second valve ports 18, 19 through the lower valve chamber 16. The inlet side joint port 12 and the inlet side longitudinal inner passage 22 are located at the left side of the first and second valve ports 18, 19.

An opposite side of the first valve port 18 communicates with the outlet side joint port 13 through an outlet side longitudinal inner passage 24 and outlet side lateral inner passages 25 and 26 formed by drilling the valve housing 11. In EXAMPLE 1, the outlet side longitudinal inner passage 24 and the outlet side lateral inner passages 25 and 26 also form a hook-shaped bent part.

An opposite side of the second valve port 19 communicates with the upper valve chamber 17. An end (i.e. lower end) of the valve element 30 faces the outlet side longitudinal inner passage 24. A closed-end drill hole 34A is formed from an end of the valve element 30. A lateral hole 34B extending in a radial direction is penetratingly formed at a part of the valve element 30 where the valve element 30 is located within the upper valve chamber 17. Therefore, the drill hole 34A and the lateral hole 34B form an inner passage 34 that connects the upper valve chamber 17 to the outlet side longitudinal inner passage 24.

A rotor case 41 of a stepping motor 40 is airtightly connected to an upper part of the valve housing 11 by means of welding or the like. The can-shaped rotor case 41 includes a cylindrical part 41A and a half sphere-shaped dome part 41 B formed integrally with the cylindrical part 41A for closing an upper end of the cylindrical part 41A. The can-shaped rotor case 41 is made of non-magnetic materials such as stainless steel having a uniform thickness as a whole.

A rotor 42 is rotatably disposed inside the cylindrical part 41A of the rotor case 41. An outer peripheral part of the rotor 42 is multipole-magnetized. A cylindrical female screw member 43 is fixed to the center of the rotor 42. The female screw member 43 and the rotor 42 are connected rotatably relatively to an upper end 33A of a valve shaft 33 of the valve element 30 by a connection member 44, fixing metal fitting 45, collar member 46 and spring 47.

A male screw member 36 having a hollow shaft-shape is fixed to an upper part of the valve shaft-guiding member 20. The male screw member 36 extends in the axial direction (i.e. up-and-down direction),
wherein the valve shaft 33 of the valve element 30 penetrates through a hollow part 36A. A male screw 36B is formed on an outer peripheral surface of the male screw member 36. The male screw 36B engages with a female screw 43A formed on an inner peripheral surface of a female screw member 43. A rotation of the rotor 42 is converted to a linear motion in the up-and-down direction by this screw engagement.

A stator assembly 48 of the stepping motor 40 is mounted to an outer periphery of the rotor case 41 being positioned by a locking piece 49. The stator assembly 48 includes an outer box 50, stator coils 51 situated up and down, a plurality of magnetic pole teeth 52 and electric connector part 53 and liquid-tightly sealed with a sealing resin 54.

A stopper-holding rod 55 is fixed inside the half sphere-shaped dome part 41B. A spiral guide 56 is attached to the stopper-holding rod 55. A movable stopper 57 engages with the spiral guide 56.

The movable stopper 57 is kicked and rotated by a pin 58 attached to the rotor 42, so that the movable stopper 57 is guided by the spiral guide 56 so as to be revolved and moved in the up-and down direction as the rotor 42 rotates. Then, the movable stopper 57 abuts against a stopper part 59 at a lower end of the stopper-holding rod 55 or a stopper part 60 at an upper end of the spiral guide 56, thereby restricting the rotation of the rotor 42 in a valve-closing direction or in a valve-opening direction.

The stepping motor 40 rotates the rotor 42 with current conduction to a stator coil 51. When the rotor 42 rotates, a rotation motion of the rotor 42 is converted to a linear motion by screw engagement between the female screw 43A and the male screw 36B, so that the rotor 42 is moved in the axial direction (i.e. up-and-down direction) in the rotor case 41. This movement of the rotor 42 in the axial direction is transmitted to the valve element 30, so that the valve element 30 moves in the axial direction (i.e. up-and-down direction).

Therefore, the first valve part 31 of the valve element 30 adjusts an opening rate of the first valve port 18 and the second valve part 32 of the valve element 30 adjusts an opening rate of the second valve port 19, so that flow rate control for about the same amount is carried out by both of the first valve port 18 and the second valve port 19.

In EXAMPLE 1, the inlet joint 14 is the lower joint and the outlet joint 15 is the lateral joint. As mentioned above, the inlet side inner passage includes the bent part formed with the inlet side lateral inner passage 21 and the inlet side longitudinal inner passage 22 in the valve housing 11, that is, the inner passage formed in the valve housing takes charge of such a bent part required in a primary piping (i.e. first piping) to avoid a reverse flow. Therefore, even in a pipe arrangement in which a primary piping exists in a lower longitudinal direction and a secondary piping exists in an upper lateral direction, a reverse flow can be avoided, that is, a pressure at the inlet side joint port 12 acts on between the first valve part 31 and the second valve part 32 of the valve element 30.

Therefore, when the valve is open, a dynamic pressure is prevented from acting on an end where the valve element 30 is seated on a valve seat around the first valve port 18 (that is, from acting on a free lower end situated on a side reverse to the side where the valve shaft 33 is located). That is, a shaft core of the valve element 30 is prevented from inclining, thereby preventing a defective operation from occurring.

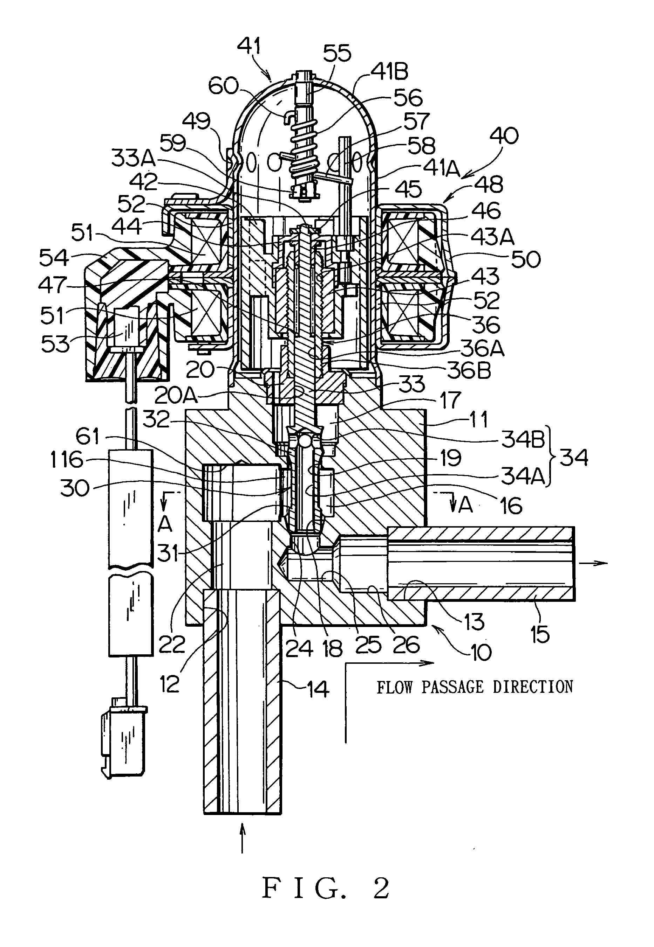

Figures 2-9 show respective examples modified from EXAMPLE 1, in which a valve device according to the present invention is applied to an electric operated plural seat-valve. In this respect, in Figs. 2 - 9, as for constitutional elements which correspond to the respective elements shown in Fig. 1, the same reference numerals as those in Fig. 1 are given thereto and their explanations are omitted hereinafter in order to avoid redundancy.

### [EXAMPLE 2]

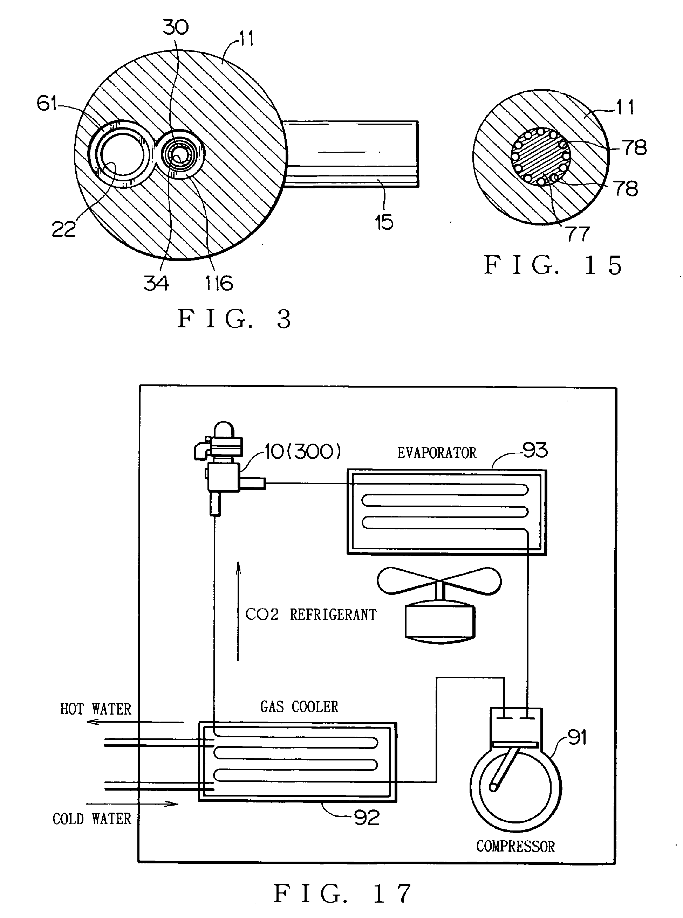

In EXAMPLE 2 shown in Figs. 2 and 3, a bent part of an inlet side inner passage is formed with an inlet side lateral inner passage 61 formed by boring and an inlet side longitudinal inner passage 22 formed by drilling, wherein the inlet side lateral inner passage 61 communicates with a lower valve chamber 116 formed by boring at one side thereof in a repeated form and communicates with an inlet side longitudinal inner passage 22 at a lower side thereof. In EXAMPLE 2, an inlet joint 14 is a lower joint and an outlet joint 15 is a lateral joint similarly to EXAMPLE 1.

### [EXAMPLE 3]

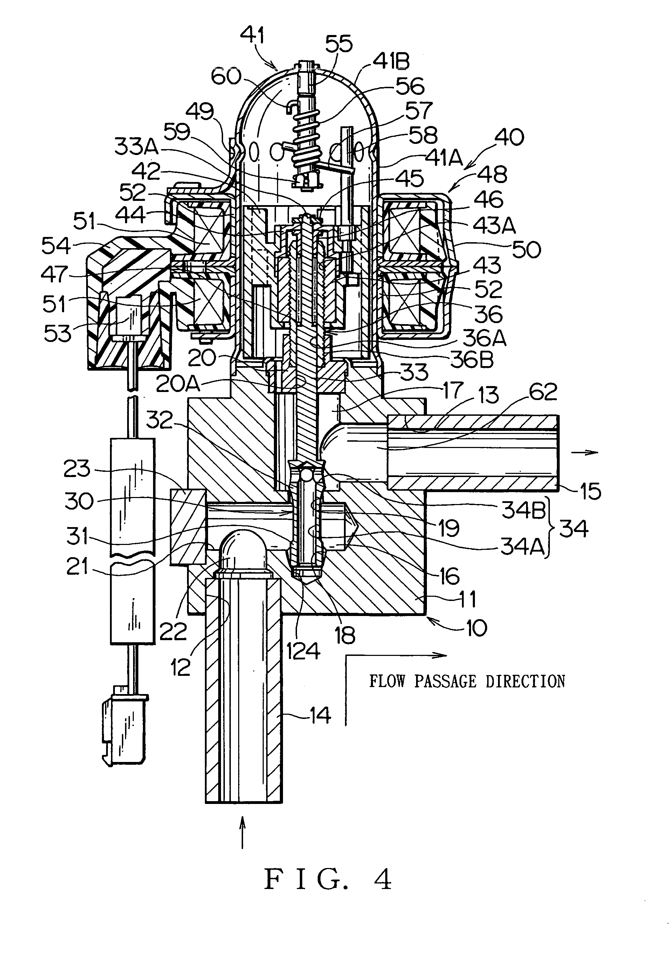

In EXAMPLE 3 shown in Fig. 4, an outlet side joint port 13 is located at a higher position, wherein the outlet side joint port 13 communicates with an upper valve chamber 17 through an outlet side lateral inner passage 62 formed in a valve housing 11. An outlet side longitudinal inner passage 124 is a hole having a bottom, wherein the outlet side longitudinal inner passage 124 communicates with the upper valve chamber 17 through an inner passage 34 formed in a valve element 30. In EXAMPLE 3, an inlet joint 14 is a lower joint and an outlet joint 15 is a lateral joint.

### [EXAMPLE 4]

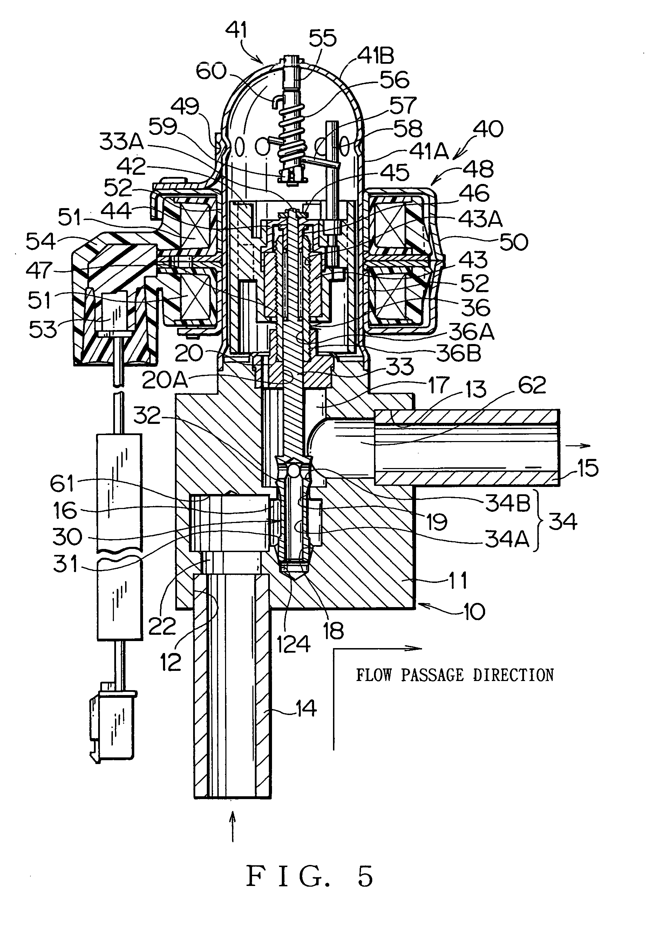

In EXAMPLE 4 shown in Fig. 5, the EXAMPLE 3 shown in Fig. 4 is applied to the EXAMPLE 2 of a boring-type shown in Figs. 2 and 3. In EXAMPLE 4, an inlet joint 14 is a lower joint and an outlet joint 15 is a lateral joint.

### [EXAMPLE 5]

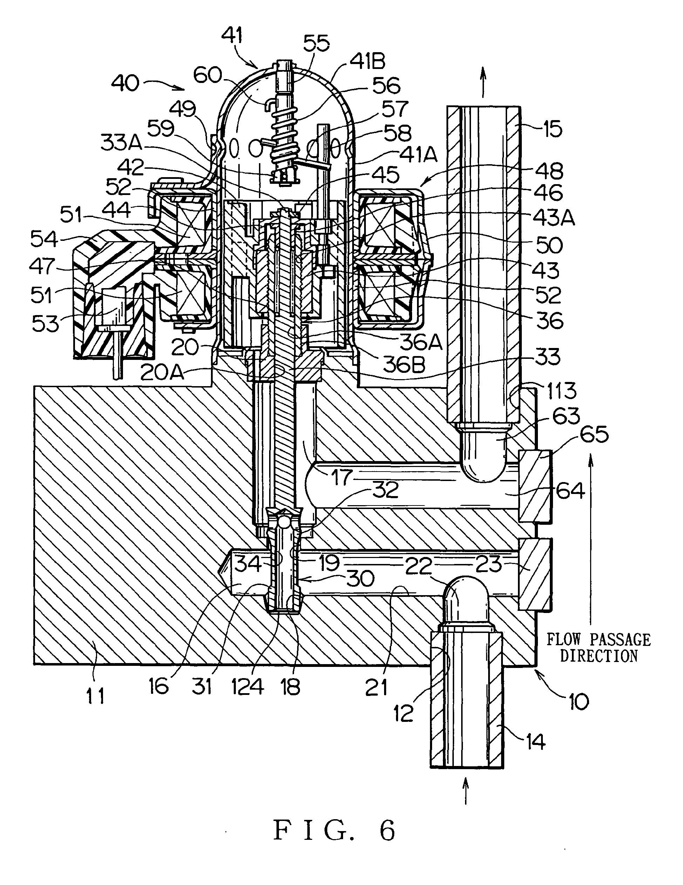

In EXAMPLE 5 shown in Fig. 6, an outlet side joint port 113 is opened at an upper surface (outer surface) of a valve housing 11. The outlet side joint port 113 communicates with an upper valve chamber 17 through an outlet side longitudinal inner passage 63 and outlet side lateral inner passage 64 formed in the valve housing 11. The outlet side longitudinal inner passage 63 and outlet side lateral inner passage 64 are drilled holes, wherein the outlet side lateral inner passage 64 is formed by drilling from a right side of the valve housing 11 and its open end is closed by a plug 65.

In EXAMPLE 5, both of an inlet side joint port 12 and the outlet side joint port 113 are located at the right side of first and second valve ports 18, 19. An inlet side lateral inner passage 21 is formed by drilling from the right side of the valve housing 11 and its open end is closed by a plug 23. In EXAMPLE 5, an inlet joint 14 is a lower joint and an outlet joint 15 is an upper joint.

### [EXAMPLE 6]

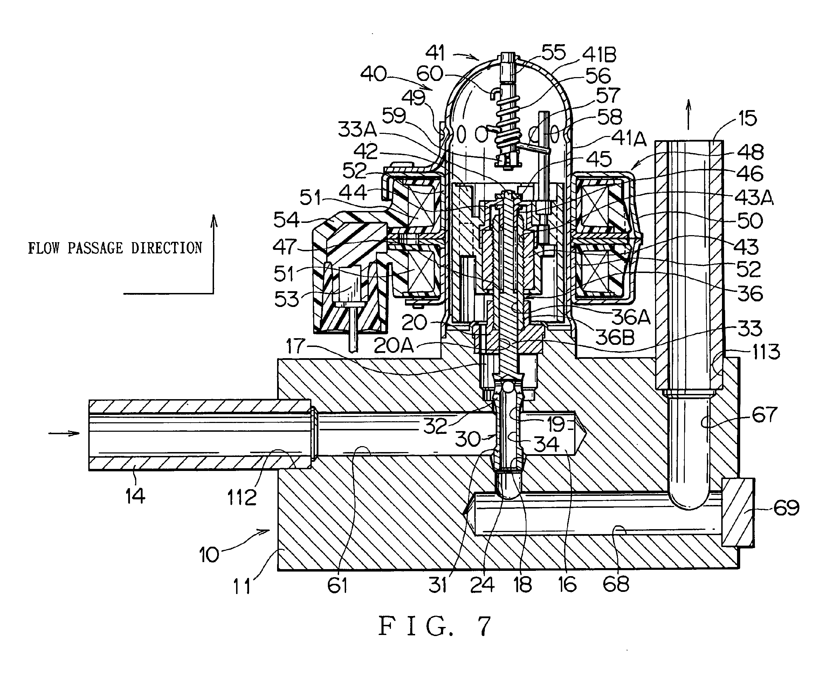

In EXAMPLE 6 shown in Fig. 7, an inlet side joint port 112 is opened at a left side surface (outer surface) of a valve housing 11. The inlet side joint port 112 communicates with a lower valve chamber 16 through an inlet side lateral inner passage 61 formed by drilling in the valve housing.

An outlet side joint port 113 opened at an upper surface of the valve housing 11 communicates with a lower side of a first valve port 18 through an outlet side longitudinal inner passage 67, outlet side lateral inner passage 68 and outlet side longitudinal inner passage 24 formed in the valve housing 11. The outlet side lateral inner passage 68 is a drilled hole formed by drilling from the right side of the valve housing 11 and its open end id closed by a plug 69. In EXAMPLE 6, an inlet joint 14 is a lateral joint and an outlet joint 15 is an upper joint.

### [EXAMPLE 7]

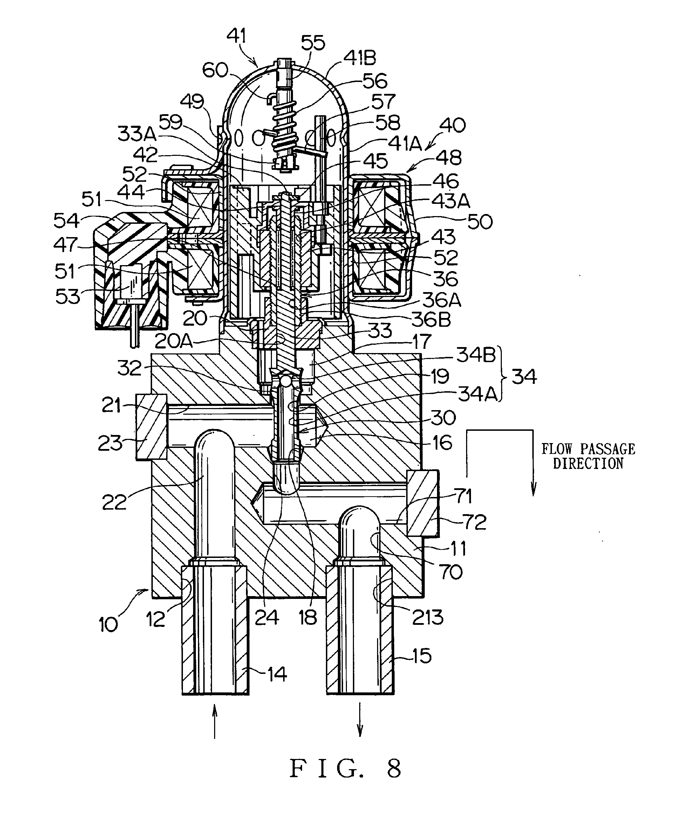

In EXAMPLE 7 shown in Fig. 8, an outlet side joint port 213 is opened at a lower bottom surface (outer surface) of a valve housing 11. The outlet side joint port 213 communicates with a lower side of a first valve port 18 through an outlet side longitudinal inner passage 70, outlet side lateral inner passage 71 and outlet side longitudinal inner passage 24 formed in the valve housing 11. The outlet side longitudinal inner passage 70 and outlet side lateral inner passage 71 are drilled holes,
wherein the outlet side lateral inner passage 71 is formed by drilling from the right side of the valve housing 11 and its open end is closed by a plug 72. In EXAMPLE 7, both of an inlet joint 14 and an outlet joint 15 are lower joints.

### [EXAMPLE 8]

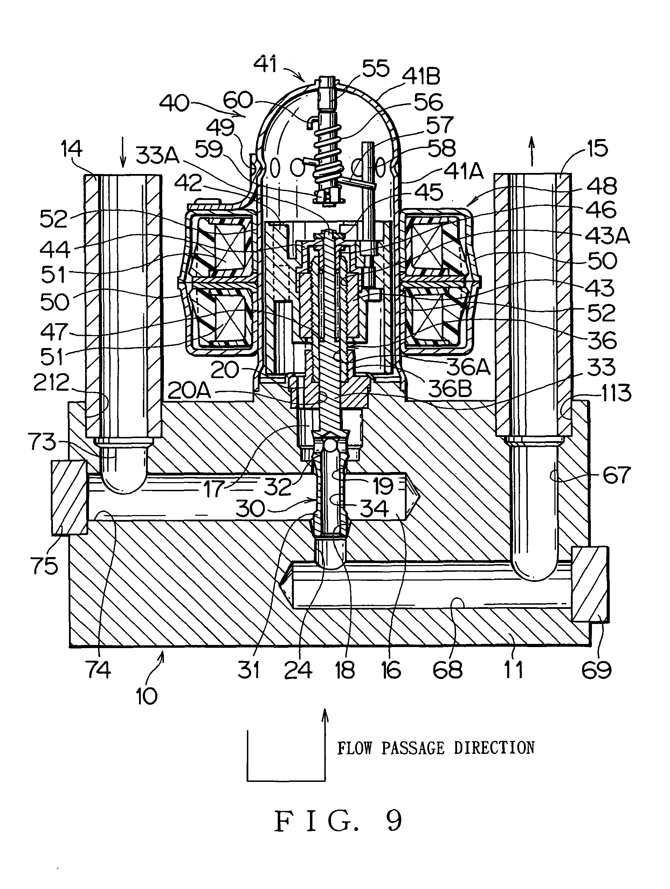

In EXAMPLE 8 shown in Fig. 9, an inlet side joint port 212 is opened at an upper surface (outer surface) of a valve housing 11. The inlet side joint port 212 communicates with a lower valve chamber 16 through an inlet side longitudinal inner passage 73 and inlet side lateral inner passage 74 formed in the valve housing 11. The inlet side longitudinal inner passage 73 and inlet side lateral inner passage 74 are drilled holes, wherein the inlet side lateral inner passage 74 is formed by drilling from a left side of the valve housing 11 and its open end is closed by a plug 75. In EXAMPLE 8, both of an inlet joint 14 and an outlet joint 15 are upper joints.

In every EXAMPLE described above, the inlet side inner passage or the outlet side inner passage includes the bent part in the valve housing 11, that is, the inner passage formed in the valve housing takes charge of such a bent part required in a primary piping (i.e. first piping) or in a secondary piping to avoid a reverse flow. Therefore, a reverse flow can be avoided in any pipe arrangement, that is, a pressure at the inlet side joint port 12 acts on between the first valve part 31 and the second valve part 32 of the valve element 30.

Therefore, when the valve is open, a dynamic pressure is prevented from acting on an end where the valve element 30 is seated on a valve seat around the first valve port 18. That is, a shaft core of the valve element 30 is prevented from inclining, thereby preventing a defective operation from occurring.

### [EXAMPLES 9 - 11]

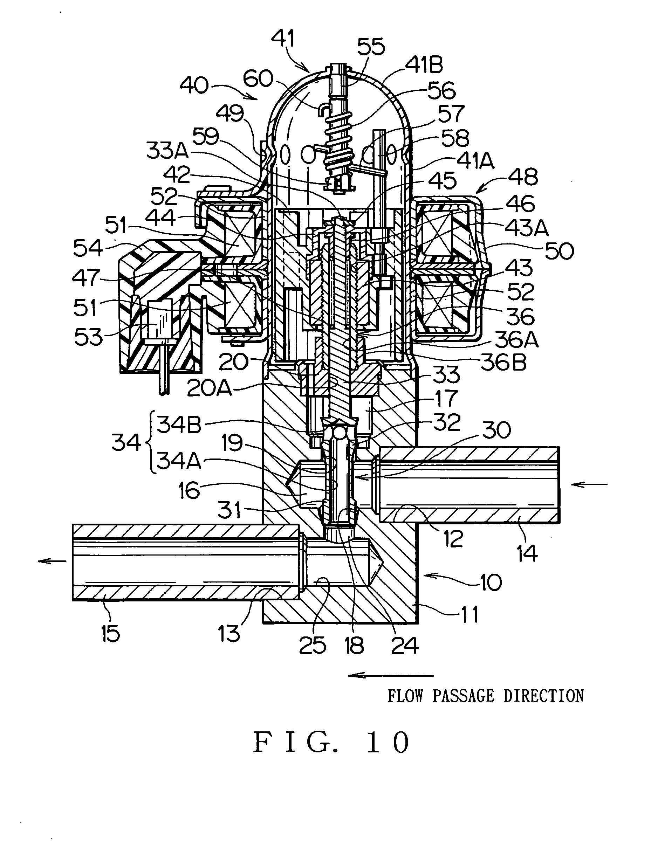

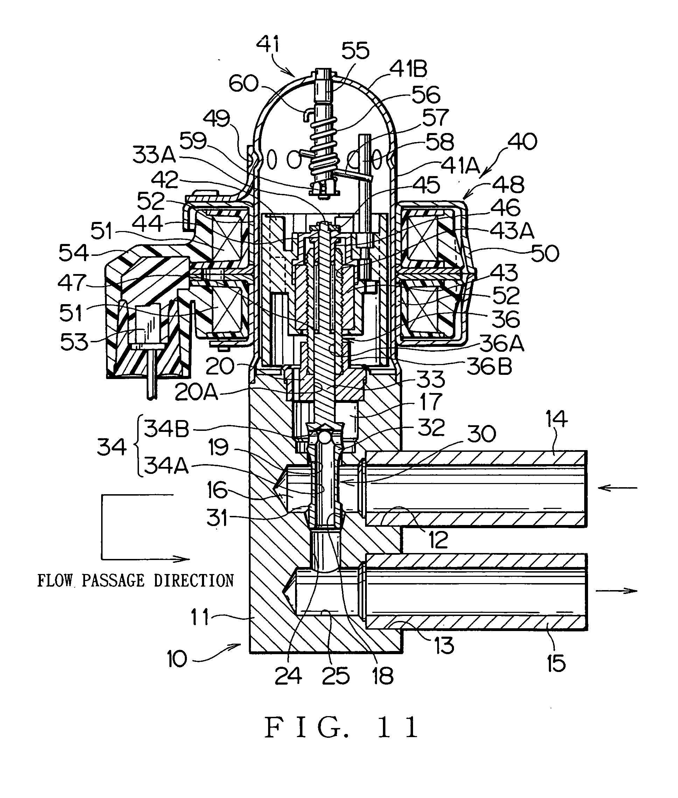

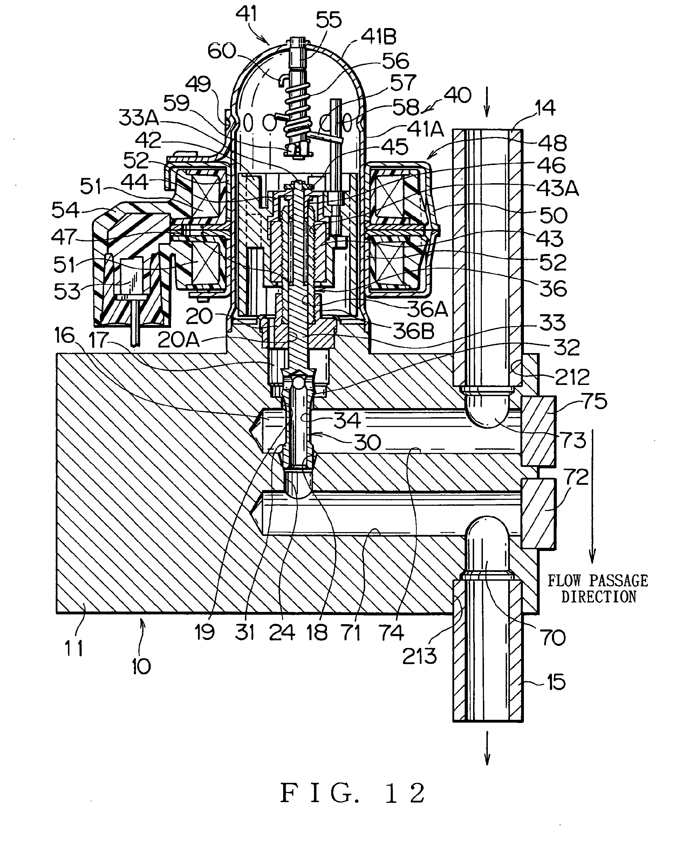

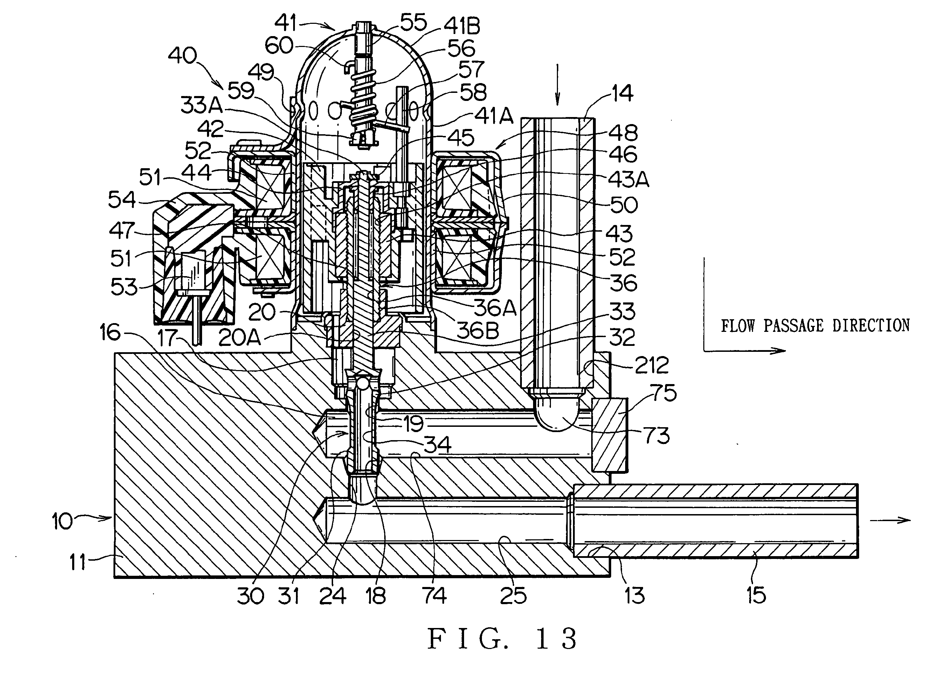

Figures 10 and 11 show EXAMPLE 9 in which both of an inlet joint 14 and an outlet joint 15 are lateral joints. Figure 12 show EXAMPLE 10 in which an inlet joint 14 is an upper joint and an outlet joint 15 is a lower joint. Figure 13 show EXAMPLE 11 in which an inlet joint 14 is an upper joint and an outlet joint 15 is a lateral joint.

### [EXAMPLE 12]

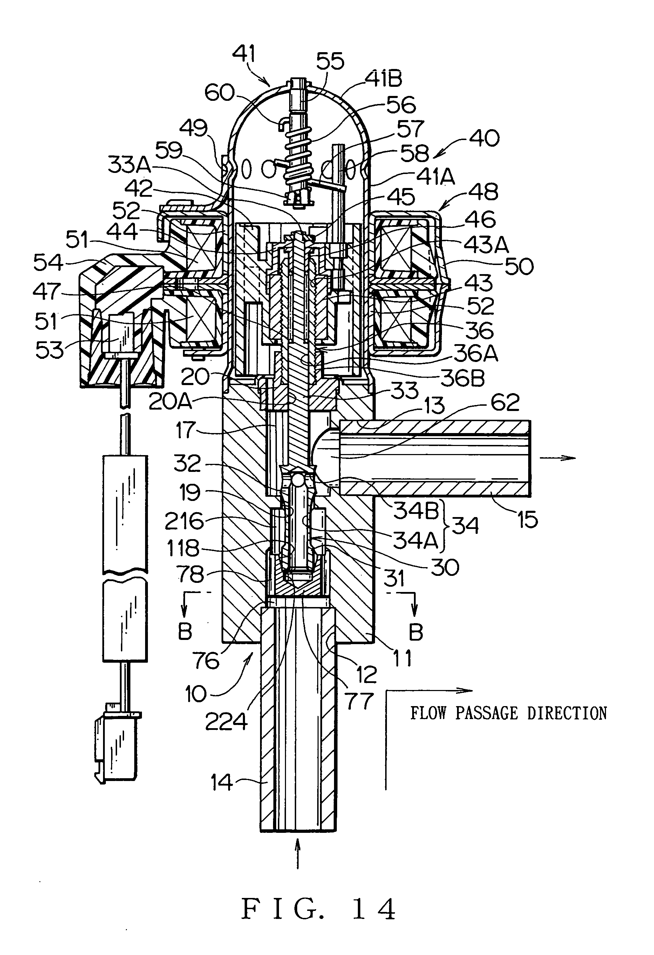

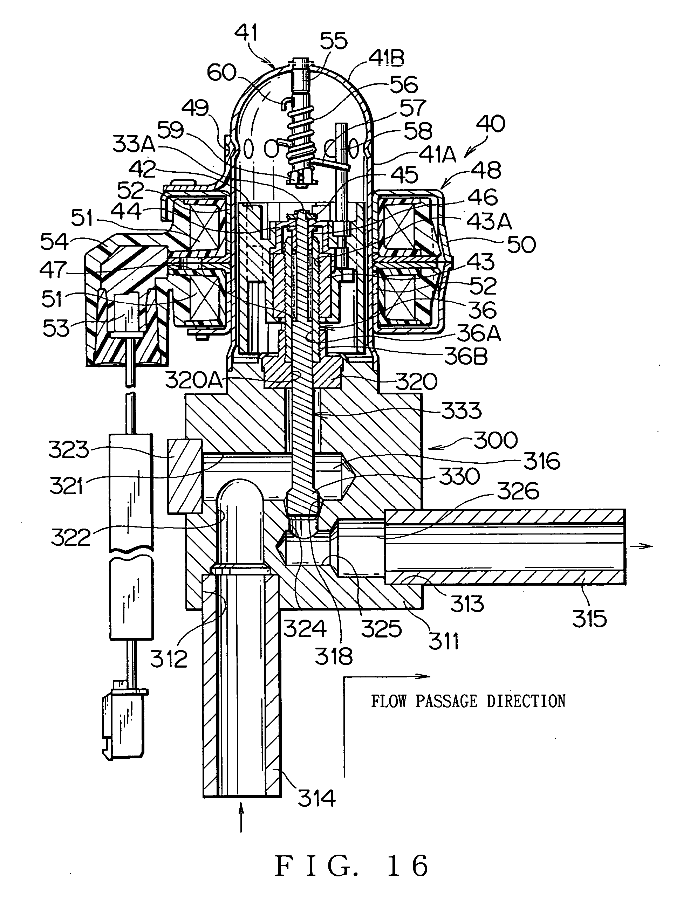

Figures 14 and 15 show EXAMPLE 12 as a further example, in which a valve device according to the present invention is applied to an electric operated plural seat-valve. In this respect, in Figs. 14 and 15, as for constitutional elements which correspond to the respective elements shown in Fig. 1, the same reference numerals as those in Fig. 1 are given thereto and their explanations are omitted hereinafter in order to avoid redundancy.

In EXAMPLE 12, an inlet joint 14 is located at a lower side of a valve housing 11. An inlet side longitudinal inner passage 76 and a lower valve chamber 216 are formed in the valve housing 11. A valve seat member 77 for defining a first valve port 118 is fixed between the inlet side longitudinal inner passage 76 and the lower valve chamber 216. An upper side of the first valve port 118 communicates with the lower valve chamber 216 while a lower side of the first valve port 118 communicates with an outlet side longitudinal inner passage 224 as a hole having a bottom formed in the valve seat member 77. The outlet side longitudinal inner passage 224 communicates with an upper valve chamber 17 through an inner passage 34 formed in the valve element 30.

The inlet side longitudinal inner passage 76 communicates with the lower valve chamber 216 through many by-pass passage holes 78 formed in the valve seat member 77.

As mentioned above, the inlet side inner passage includes the by-pass passage holes 78, that is, the inner passage in the valve housing takes charge of a bent part required in a primary piping (i.e. first piping) to avoid a reverse flow. Therefore, even in a pipe arrangement in which a primary piping exists in a lower longitudinal direction and a secondary piping exists in an upper lateral direction, a reverse flow can be avoided, that is, a pressure at the inlet side joint port 12 acts on between the first valve part 31 and the second valve part 32 of the valve element 30.

Therefore, also in EXAMPLE 12, when the valve is open, a dynamic pressure is prevented from acting on an end where the valve element 30 is seated on a valve seat around the first valve port 118 (that is, from acting on a free lower end situated on a side reverse to the side where the valve shaft 33 is located). That is, a shaft core of the valve element 30 is prevented from inclining, thereby preventing a defective operation from occurring.

### [EXAMPLE 13]

Figure 16 is a longitudinal cross sectional view of a valve device in EXAMPLE 13 of the present invention, in which the valve device is applied to an electric operated single seat-valve.

The electric operated single seat-valve in EXAMPLE 13 is indicated by reference numeral 300 as a whole thereof. The single seat-valve 300 includes a block-shaped valve housing 311. The valve housing 311 is provided with an inlet side joint port 312 opening at a lower bottom surface (outer surface) of the valve housing 311 and an outlet side joint port 313 opening at a right side surface (outer surface) of the valve housing 311. The inlet side joint port 312 is connected to an inlet joint (lower joint) 314 while the outlet side joint port 313 is connected to an outlet joint (lateral joint) 315.

Inside the valve housing 311, a valve chamber 316 is formed. A valve port 318 communicating with an outlet side longitudinal inner passage 324 (explained later) is formed at a lower bottom surface of the valve chamber 316.

A valve shaft-guiding member 320 is fixed being caulked at an upper part of the valve housing 311. The valve shaft-guiding member 320 has a bearing hole 320A passing through in an up-and-down direction (i.e. in an axial direction), by which a valve shaft 333 of a valve element 330 is supported slidably in the axial direction. The valve element 330 opens and closes the valve port 318 by its movement in the axial direction. The valve shaft 333 is formed at an upper side of the valve element 330.

One side of the valve port 318 communicates with the inlet side joint port 312 through a valve chamber 316, a lateral hole-shaped (i.e. cave-shaped) inlet side lateral inner passage 321 and a longitudinal hole-shaped (i.e. pit-shaped) inlet side longitudinal inner passage 322 formed in the valve housing 311. The inlet side lateral inner passage 321 is a drill hole drilled from a left side of the valve housing 311. The lower valve chamber 316 is also formed with this drill hole. An open end of this drill hole is closed by a plug 323. The inlet side longitudinal inner passage 322 is a drill hole drilled from a lower bottom surface of the valve housing 311. The inlet side longitudinal inner passage 322 communicates with the inlet side joint port 312 at the lower side thereof and communicates with the inlet side lateral inner passage 321 at an upper end thereof.

The inlet side lateral inner passage 321 and the inlet side longitudinal inner passage 322 form a hook-shaped bent part that connects the inlet side joint port 312 to one side of the valve ports 318 through the lower valve chamber 316. The inlet side joint port 312 and the inlet side longitudinal inner passage 322 are located at the left side of the valve port 18.

An opposite side of the valve port 318 communicates with the outlet side joint port 313 through an outlet side longitudinal inner passage 324 and outlet side lateral inner passages 325 and 326 formed by drilling the valve housing 311. In EXAMPLE 13, the outlet side longitudinal inner passage 324 and the outlet side lateral inner passages 325 and 326 also form a hook-shaped bent part.

The valve shaft 333 is connected to a rotor 42 of a stepping motor 40. A structure concerning the stepping motor 40 and a feed screw consisting of a male screw member 36 and a female screw member 43 is the same as that in the EXAMPLES described above, therefore an explanation thereof is omitted in order to avoid redundancy.

In EXAMPLE 13, the inlet joint 314 is the lower joint and the outlet joint 315 is the lateral joint. As mentioned above, the inlet side inner passage includes the bent part formed with the inlet side lateral inner passage 321 and the inlet side longitudinal inner passage 322 in the valve housing 311, that is, the inner passage formed in the valve housing takes charge of such a bent part required in a primary piping (i.e. first piping) to avoid a reverse flow. Therefore, even in a pipe arrangement in which a primary piping exists in a lower longitudinal direction and a secondary piping exists in an upper lateral direction, a reverse flow can be avoided, that is, a pressure at the inlet side joint port 312 acts on the valve shaft 333 of the valve element 330 from a lateral direction of the valve shaft 333.

Therefore, when the valve is open, a dynamic pressure is prevented from acting on an end where the valve element 330 is seated on a valve seat around the valve port 318 (that is, from acting on a free lower end situated on a side reverse to the side where the valve shaft 333 is located). That is, a shaft core of the valve element 330 is prevented from inclining, thereby preventing a defective operation from occurring.

As for the electric operated single seat-valve, its modified examples similar to those of the electric operated plural seat-valve described above are possible and can be put into practice.

### [EXAMPLE 14]

Figure 17 shows a block diagram of a hot water supply cycle device using a CO₂ refrigerant in EXAMPLE 14, in which the electric operated plural seat-valve 10 or the electric operated single seat-valve 300 described above is employed.

The hot water supply cycle device is a heat pump-type hot water supply device, in which a CO₂ refrigerant circuit including a compressor 91, gas cooler 92 corresponding to a condenser, electric operated plural seat-valve 10 or electric operated single seat-valve 300 and evaporator 93 is constructed, wherein heat exchange is carried out between high temperature CO₂ refrigerant and cold water passing through the gas cooler 92 so as to supply hot water.

## Claims

1. A valve device comprising:
a valve housing;
an inlet side joint port and an outlet side joint port, both opened at an outer surface of the valve housing;
a valve port formed in the valve housing; and
a valve element formed in the valve housing for opening and closing the valve port when the valve element moves in an axial direction thereof, the valve element including a valve shaft supported slidably in the axial direction by the valve housing at one side of the valve element, the valve shaft being connected to driving means for driving the valve element,
wherein one side of the valve port communicates with the inlet side joint port through an inlet side inner passage formed in the valve housing, while an opposite side of the valve port communicates with the outlet side joint port through an outlet side inner passage formed in the valve housing,
wherein the inlet side inner passage includes a bent part in the valve housing so that a pressure at the inlet side joint port acts on the valve shaft of the valve element from a lateral direction of the valve shaft.

2. A valve device comprising:
a valve housing;
an inlet side joint port and an outlet side joint port, both opened at an outer surface of the valve housing;
a first valve port and a second valve port, both formed in the valve housing on the same axis having a distance therebetween in an axial direction thereof; and
a valve element formed in the valve housing including integrally a first valve part for opening and closing the first valve port and a second valve part for opening and closing the second valve port when the valve element moves in an axial direction thereof, the valve element including a valve shaft supported slidably in the axial direction by the valve housing at one side of the valve element, the valve shaft being connected to driving means for driving the valve element,
wherein each one side of the first and second valve ports communicates with the inlet side joint port through an inlet side inner passage formed in the valve housing, while each opposite side of the first and second valve ports communicates with the outlet side joint port through an outlet side inner passage formed in the valve housing and the valve element,
wherein the inlet side inner passage includes a bent part so that a pressure at the inlet side joint port acts on between the first valve part and the second valve part of the valve element.

3. A valve device comprising:
a valve housing;
an inlet side joint port and an outlet side joint port, both opened at an outer surface of the valve housing;
a first valve port and a second valve port, both formed in the valve housing on the same axis having a distance therebetween in an axial direction thereof; and
a valve element formed in the valve housing including integrally a first valve part for opening and closing the first valve port and a second valve part for opening and closing the second valve port when the valve element moves in an axial direction thereof, the valve element including a valve shaft supported slidably in the axial direction by the valve housing at one side of the valve element, the valve shaft being connected to driving means for driving the valve element,
wherein each one side of the first and second valve ports communicates with the inlet side joint port through an inlet side inner passage formed in the valve housing, while each opposite side of the first and second valve ports communicates with the outlet side joint port through an outlet side inner passage formed in the valve housing and the valve element,
wherein the inlet side inner passage includes a by-pass passage so that a pressure at the inlet side joint port acts on between the first valve part and the second valve part of the valve element.
